# EUROPEAN PATENT APPLICATION

(11) **EP 4 593 051 A1**
(43) Date of publication of application: **30.07.2025**
(21) Application number: 23868426.0
(22) Date of filing: 30.08.2023
(51) Int. Cl.: H01G 11/78, H01G 2/10

(54) **ENERGY STORAGE DEVICE**

(30) Priority: 19.09.2022 KR 20220117680
(71) Applicant: LS Materials Co., Ltd., Gyeonggi-do 14118 (KR)
(72) Inventor: SON, Sang Woo, Anyang-si Gyeonggi-do 14118 (KR); LEE, Jung Gul, Anyang-si Gyeonggi-do 14118 (KR); YU, Hyun Jae, Anyang-si Gyeonggi-do 14118 (KR)
(74) Representative: Botti & Ferrari S.p.A.
(86) International application number: PCT/KR2023/012874
(87) International publication number: WO 2024/063371

(57) **Abstract**

The present invention relates to an energy storage device including a module case in which a plurality of accommodation spaces are formed, a plurality of bare cells, each of which is accommodated in one of the accommodation spaces, a cover coupled to the module case, and a coupling part coupling the module case to the cover, wherein the module case is in direct contact with the bare cells accommodated in the accommodation spaces to support the bare cells, the cover includes a cover main body coupled to the module case to cover the accommodation spaces, an outer wall member protruding from a cover facing surface of the cover main body, which faces the module case, in a first direction toward the module case, and an inner wall member protruding from the cover facing surface in the first direction and disposed to be spaced apart from the outer wall member, and the coupling part includes a first coupling member disposed between the outer wall member and the inner wall member to couple the module case to the cover.

## Description

### [Technical Field]

The present invention relates to an energy storage device for storing energy such as electric energy.

### [Background Art]

Batteries, capacitors, and the like are representative energy storage devices for storing electric energy. Among these capacitors, ultra-capacitors (UCs) have high efficiency, a semi-permanent lifetime, and fast charging/discharging characteristics and thus are forming a market as an energy storage device capable of solving short cycle and momentary high-voltage problems which are weaknesses of secondary batteries.

Based on these advantages, the UCs are generally used not only as auxiliary power sources for mobile devices such as mobile phones, tablet PCs, and notebook computers, but also as main or auxiliary power sources for electric vehicles, hybrid electric vehicles, solar cell power supplies, night road lights, and uninterrupted power supplies (UPSs), which require high capacity.

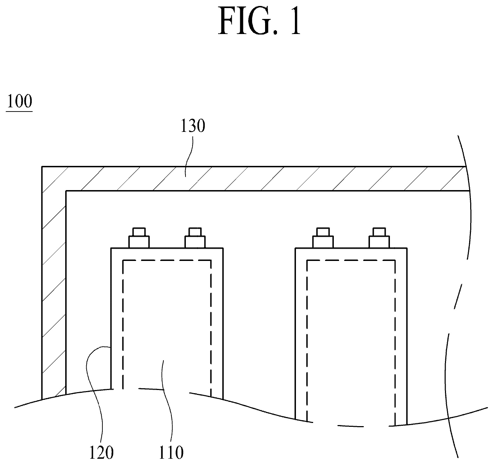

FIG. 1 is a conceptual plan cross-sectional view of an energy storage device according to the related art.

Referring to FIG. 1, an energy storage device 100 according to the related art includes a plurality of bare cells 110, a plurality of cell cases 120, each of which accommodates the bare cell 110, and a module case 130 which accommodates the cell cases 120.

**The bare** cells 110 can each be accommodated in one of the cell cases 120. The cell cases 120 in which the bare cells 110 are accommodated can be accommodated in the module case 130. Accordingly, the energy storage device 100 according to the related art can be modularized in a state in which the bare cells 110 are accommodated in the cell cases 120.

Here, an energy density can be increased by increasing the number of bare cells 110 accommodated in the module case 130, and the energy storage device 100 according to the related art has a problem that it is difficult to increase the energy density because the volume of the cell cases 120 inside the module case 130 acts as a dead space.

### [Disclosure]

### [Technical Problem]

The present invention has been made in efforts to solve the above problems and is directed to providing an energy storage device that allows an energy density to be prevented from being decreased due to cell cases in which bare cells are accommodated.

### [Technical Solution]

To achieve the above object, the present invention may include the following configuration.

An energy storage device according to the present invention includes a module case in which a plurality of accommodation spaces are formed, a plurality of bare cells, each of which is accommodated in one of the accommodation spaces, a cover coupled to the 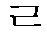 module case, and a coupling part coupling the module case to the cover. The module case may be in direct contact with the bare cells accommodated in the accommodation spaces to support the bare cells.

**In** the energy storage device according to the present invention, the cover may include a cover main body coupled to the module case to cover the accommodation spaces, an outer wall member protruding from a cover facing surface of the cover main body, which faces the module case, in a first direction toward the module case, and an inner wall member protruding from the cover facing surface in the first direction and disposed to be spaced apart from the outer wall member.

**In** the energy storage device according to the present invention, the coupling part may include a first coupling member disposed between the outer wall member and the inner wall member to couple the module case to the cover.

### [Advantageous Effects]

According to the present invention, the following effects can be achieved.

The present invention can be implemented so that a bare cell is directly supported by a module case without a cell case. Accordingly, according to the present invention, the space for the cell case inside the module case can be used as a space for accommodating the bare cell. Accordingly, the present invention can increase an energy density by increasing the volume of the bare cell.

The present invention is implemented so that a movable distance of a first coupling member can be limited using an inner wall member and an outer wall member. Accordingly, according to the present invention, the first coupling member can firmly maintain a coupling state of a cover and the module case. Therefore, according to the present invention, by increasing a pressure resistance strength through an increase in coupling strength by the first coupling member, it is possible to improve pressure resistance performance and anti-explosion performance.

### [Description of Drawings]

FIG. 1 is a conceptual plan cross-sectional view of an energy storage device according to the related art.
FIG. 2 is a schematic perspective view of an energy storage device according to the present invention.
FIG. 3 is a schematic exploded perspective view of the energy storage device according to the present invention.
FIG. 4 is a conceptual diagram for describing a bare cell in the energy storage device according to the present invention.
FIG. 5 is a schematic exploded cross-sectional view illustrating the energy storage device along line **I-I'** in FIG. 2 according to the present invention.
FIG. 6 is a schematic bottom perspective view of a cover in the energy storage device according to the present invention.
FIG. 7 is a schematic coupling cross-sectional view illustrating the energy storage device along line **I-I'** in FIG. 2 according to the present invention.
FIG. 8 is a schematic plan view of a module case in the energy storage device according to the present invention.
FIG. 9 is a schematic bottom view of the cover in the energy storage device according to the present invention.
FIG. 10 is a schematic enlarged exploded cross-sectional view illustrating an arrangement relationship between an outer wall member, an inner wall member, and a coupling part along line I-I' in FIG. 2.
FIGS. 11 and 12 are enlarged conceptual diagrams of an arrangement relationship between the outer wall member, the inner wall member, and the coupling part based on the bottom view of the cover in the energy storage device according to the present invention.
FIG. 13 is an enlarged cross-sectional view illustrating a part of the cover along line I-I' in FIG. 2 in the energy storage device according to the present invention.
FIG. 14 is a schematic plan view of the energy storage device according to the present invention.
FIG. 15 is an enlarged cross-sectional view illustrating an internal terminal and a first external terminal that are connected to one side of a bare cell and the internal terminal and a busbar that are connected to the other side of the bare cell along line II-II' in FIG. 14 in the energy storage device according to the present invention.
FIG. 16 is an exploded perspective view of bare cells, internal terminals, external terminals, and busbars in the energy storage device according to the present invention.

### [Mode for Invention]

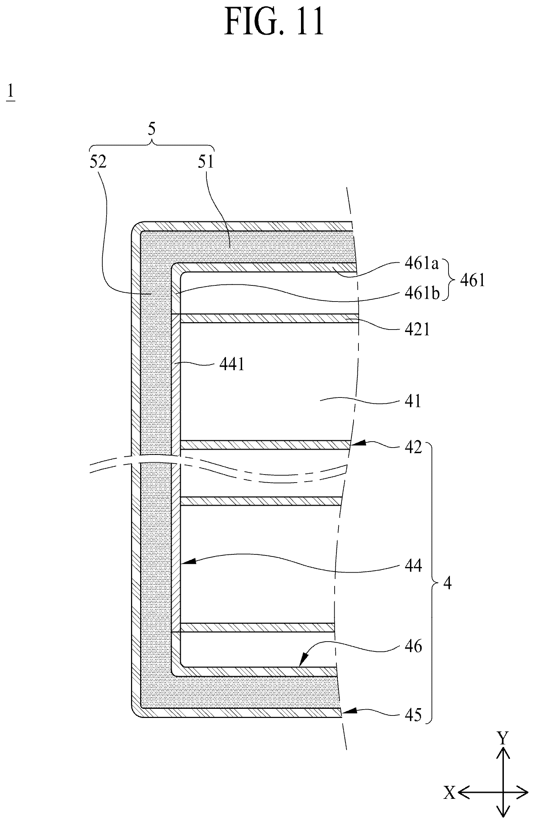

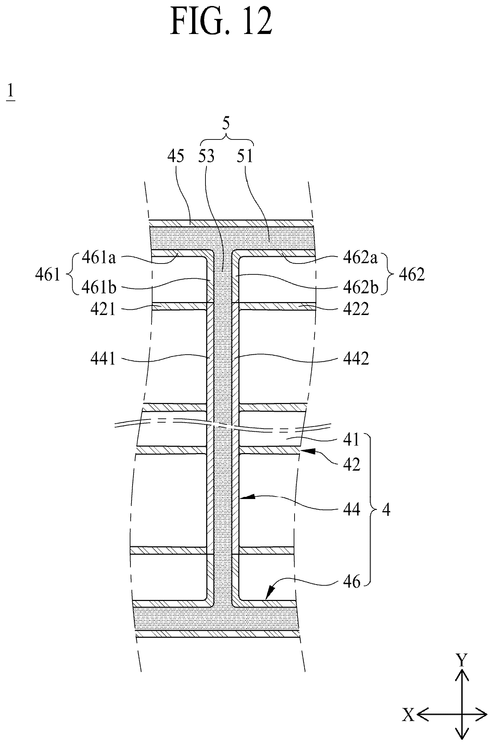

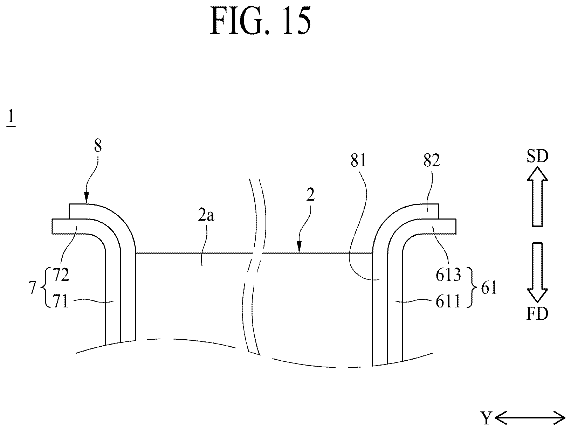

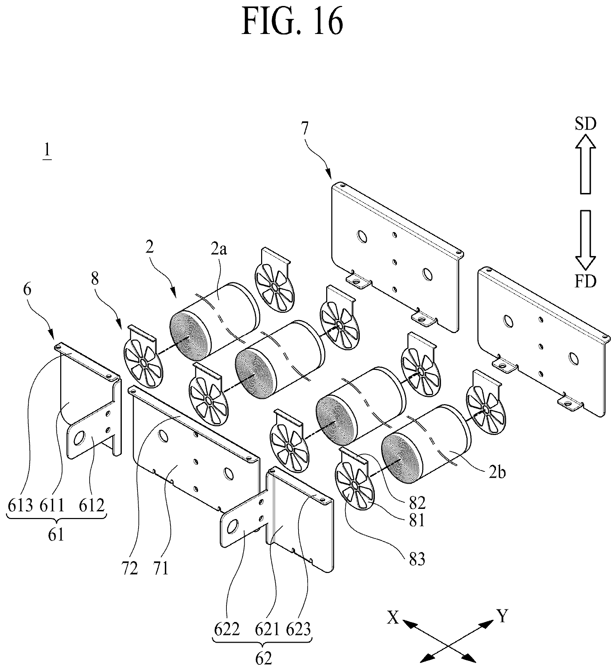

Hereinafter, an energy storage device according to embodiments of the present invention will be described in detail with reference to the accompanying drawings. In FIGS. 11, 12, and 14 to 16, two parallel dash-dotted lines are omission lines. FIGS. 11 and 12 illustrate conceptual arrangement of a coupling part when a cover and a module case are coupled based on **a bottom** view of the cover.

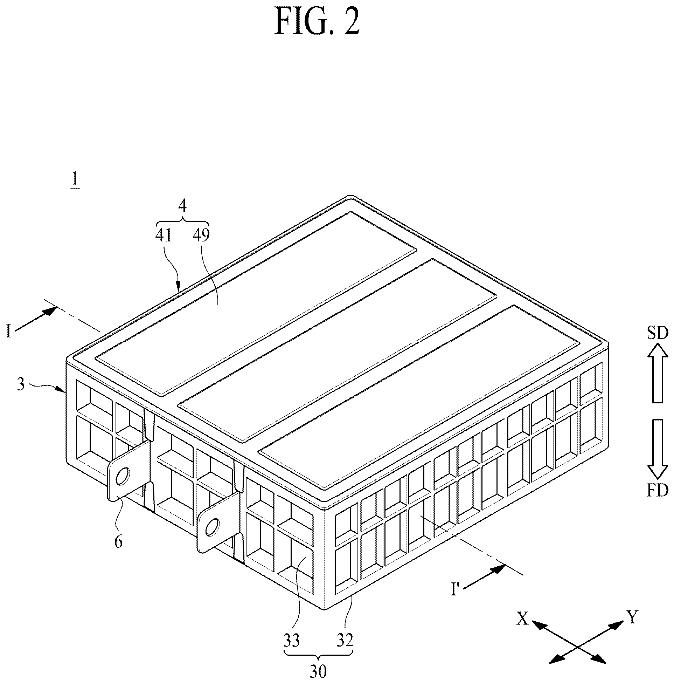

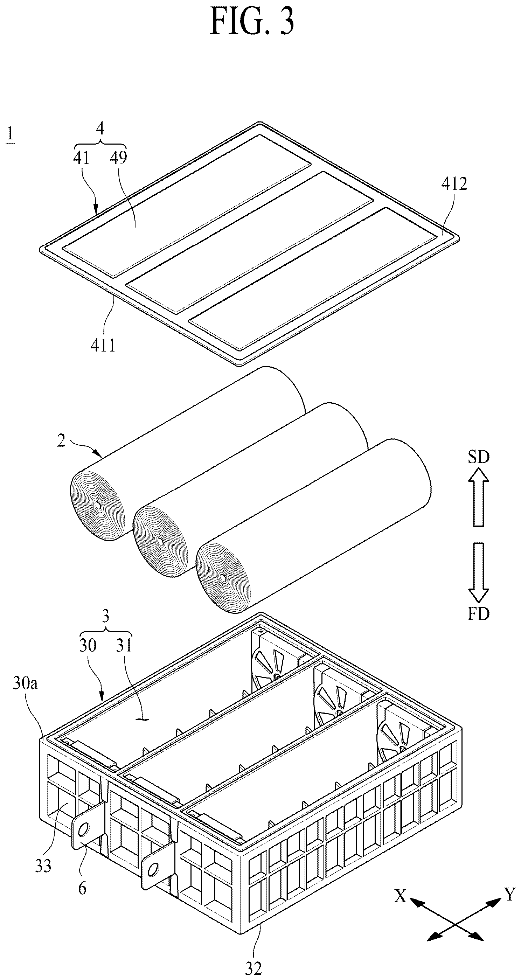

Referring to FIGS. 2 and 3, an energy storage device 1 according to the present invention is configured to store electric energy. The energy storage device 1 according to the present invention may be implemented by modularizing a plurality of ultra-capacitors (UCs). The energy storage device 1 according to the present invention may include bare cells 2, a module case 3, and a cover 4.

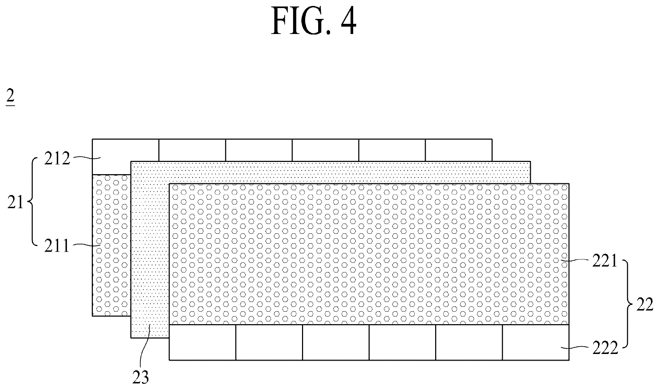

Referring to FIGS. 2 to 4, the bare cell 2 is accommodated in the module case 3. The bare cell 2 is called an electrode element and may be a UC to which the cell case 120 (see FIG. 1) is not coupled. The bare cell 2 may be accommodated in the module case 3 without the cell case 120 (see FIG. 1). Accordingly, the energy storage device 1 according to the present invention may use the space for the cell case 120 (see FIG. 1) inside the module case 3 as a space for storing the bare cell 2 and thus is implemented to further increase an energy density by increasing the volume of the bare cell 2.

The bare cell 2 may be formed by winding a first electrode 21, a second electrode 22 having a polarity opposite to that of the first electrode 21, and a separator 23 disposed between the first electrode 21 and the second electrode 22 to electrically separate the first electrode 21 and the second electrode 22. **In** an embodiment, when the first electrode 21 is a positive (+) electrode, the second electrode 22 is a negative (-) electrode. Conversely, when the first electrode 21 is a negative (-) electrode, the second electrode 22 is a positive (+) electrode. The bare cell 2 may be formed by sequentially winding the separator 23, the first electrode 21, the separator 23, and the second electrode 22. The bare cell 2 may be formed by sequentially winding the separator 23, the second electrode 22, the separator 23, and the first electrode 21.

The first electrode 21 may include a first active material layer 211 formed using activated carbon on a current collector (not illustrated) made of a metal material, and a first electrode lead 212 connected to one side of the first active material layer 211. In this case, the first electrode lead 212 is a portion of the current collector on which the first active material layer 211 is not formed.

The second electrode 22 may include a second active material layer 221 formed using activated carbon on a current collector (not illustrated) made of a metal material, and a second electrode lead 222 connected to one side of the second active material layer 221. In this case, the second electrode lead 222 is a portion of the current collector on which the second active material layer 221 is not formed.

In the above embodiment, the current collectors of the first electrode 21 and the second electrode 22 may be formed using a metal foil. The current collector serves as a moving path of charges discharged from or supplied to the first active material layer 211 and the second active material layer 221. The first active material layer 211 and the second active material layer 221 may be applied on both surfaces of the current collector. The first active material layer 211 and the second active material layer 221 are parts in which electric energy is stored.

In an embodiment, the first electrode 21 and the second electrode 22 may be wound so that the first electrode lead 212 is positioned at an upper side of the bare cell 2 and the second electrode lead 222 is positioned at a lower side of the bare cell 2.

Meanwhile, the bare cell 2 may be impregnated with an electrolyte for charging electric energy. **In** this case, a process of impregnating the bare cell 2 with the electrolyte may be performed by immersing the bare cell 2 in a container filled with the electrolyte for a certain time. The process of impregnating the bare cell 2 with the electrolyte may be performed in a state in which the bare cell 2 is accommodated in the module case 3.

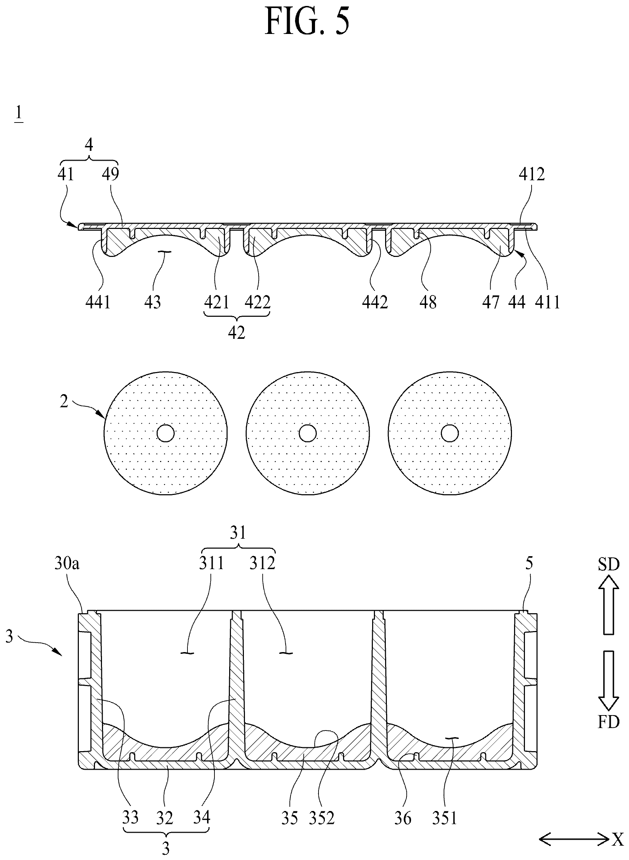

Referring to FIGS. 2 to 5, the module case 3 is formed to accommodate the bare cell 2. An accommodation space 31 may be formed in the module case 3. The bare cell 2 may be accommodated in the accommodation space 31 and thus accommodated inside the module case 3. The accommodation space 31 may be implemented using a groove formed at a certain depth from an upper surface of the module case 3. The module case 3 may be in direct contact with the bare cell 2 accommodated in the accommodation space 31 to support the bare cell 2. That is, the bare cell 2 may be directly supported by the module case 3 without the cell case 120 (see FIG. 1). Accordingly, the energy storage device 1 according to the present invention is implemented so that the space for the cell case 120 (see FIG. 1) in the accommodation space 31 may be used as at least one of the space for storing the bare cell 2 and an empty space. Accordingly, the energy storage device 1 according to the present invention is implemented to achieve at least one of an increase in the volume of the empty space in the accommodation space 31 and an increase in the energy density through an increase in the volume of the bare cell 2.

A plurality of accommodation spaces 31 may be formed in the module case 3. The accommodation spaces 31 may be disposed to be spaced apart from each other in a first axis direction (an X-axis direction). The bare cells 2 may each be accommodated in one of the accommodation spaces 31 and thus disposed to be spaced apart from each other in the first axis direction (the X-axis direction). **In** this case, the module case 3 may be in direct contact with the bare cells 2, each of which is accommodated in one of the accommodation spaces 31 to support the bare cells 2. FIG. 3 illustrates three accommodation spaces 31 formed in the module case 3, but the present invention is not limited thereto, and two or four or more accommodation spaces 31 may be formed in the module case 3.

The module case 3 may include a module main body 30 in which the accommodation spaces 31 are formed. The module main body 30 forms the overall exterior of the module case 3. The module main body 30 may include a floor member 32, a sidewall member 33, and a partition member 34.

The floor member 32 is disposed at lower sides of the accommodation spaces 31. The floor member 32 may have a supporting force for supporting the bare cells 2 accommodated in the accommodation spaces 31. The entirety of the floor member 32 may be formed in a quadrangular plate shape and disposed to lie down in a horizontal direction.

The sidewall member 33 protrudes upward from an outer surface of the floor member 32. The module case 3 may include a plurality of the sidewall members 33. The sidewall members 33 may protrude upward from different sides of the floor member 32. **In** this case, the accommodation spaces 31 may be disposed inside the sidewall members 33. The entirety of the sidewall members 33 may be formed in a quadrangular plate shape and disposed to be upright in a vertical direction.

The partition member 34 is formed to partition the accommodation spaces 31. The partition member 34 may protrude upward from the floor member 32 between the sidewall members 33. Accordingly, the partition member 34 may be disposed between the accommodation spaces 31. **In** this case, the partition member 34 may be disposed between the accommodation spaces 31 in the first axis direction (the X-axis direction). The module case 3 may include at least one partition member 34. When the number of accommodation spaces 31 is N (N is an integer greater than 1), the module case 3 may include N-1 partition members 34. When a plurality of partition members 34 are provided, the partition members 34 may be disposed to be spaced apart from each other in the first axis direction (the X-axis direction). The entirety of the partition member 34 may be formed in a quadrangular plate shape and disposed to be upright in the vertical direction.

The partition member 34, the sidewall members 33, and the floor member 32 may be formed integrally. **In** this case, the partition member 34, the sidewall members 33, and the floor member 32 may be formed integrally through injection molding.

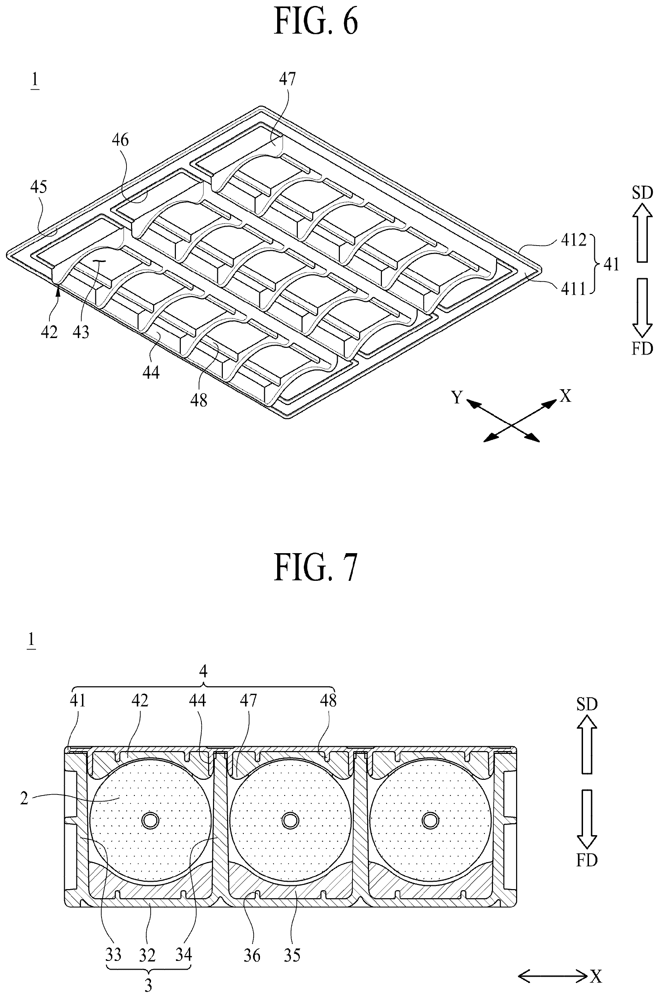

Referring to FIGS. 2 to 7, the cover 4 is formed to be coupled to the module case 3. The cover 4 may be coupled to the module case 3 to cover the accommodation spaces 31. Accordingly, the accommodation spaces 31 may be spatially separated.

The cover 4 and the module case 3 may be formed of a material which does not react to the electrolyte impregnated in the bare cells 2, such as a material with low conductivity. Since the bare cells 2 are accommodated in the accommodation spaces 31 without the cell case 120 (see FIG. 1), the material with low conductivity is for preventing defects, such as a short circuit, of the bare cells from occurring when the electrolyte leaks from the bare cells 2. For example, the cover 4 and the module case 3 may be formed of a plastic material. Accordingly, the cover 4 and the module case 3 can prevent defects such as a short circuit from occurring even when the electrolyte leaks from the bare cells 2. The cover 4 and the module case 3 may be formed of a plastic material and coupled to each other.

The cover 4 and the module case 3 may be formed of the same material. The cover 4 and the module case 3 may be formed using polyamide. The cover 4 and the module case 3 may be formed using at least one of ZYTEL, MINLON, DELRIN, CRASTIN, RYNITE, ETPV, and SORONA available from DuPont de Nemours, Inc.

The cover 4 may include a cover main body 41.

The cover main body 41 is formed to cover the accommodation spaces 31. When the cover 4 and the module case 3 are coupled, the cover main body 41 may be disposed at an upper side of the module case 3 to cover the accommodation spaces 31. The cover main body 41 may be coupled to the module case 3 so that a cover facing surface 411 faces the module case 3. In this case, the cover facing surface 411 may be disposed to be oriented in a first direction (an FD arrow direction). The first direction (the FD arrow direction) is a direction from the cover 4 toward the module case 3. An outer cover surface 412 disposed at a side opposite to the cover facing surface 411 may be disposed to be oriented in a second direction (an SD arrow direction). The second direction (the SD arrow direction) and the first direction (the FD arrow direction) may be directions which are parallel to the vertical direction and are opposite to each other. In this case, the cover facing surface 411 may correspond to a lower surface of the cover main body 41, and the outer cover surface 412 may correspond to an upper surface of the cover main body 41. The entirety of the cover main body 41 may be formed in a quadrangular plate shape and disposed to lie down in the horizontal direction.

The cover 4 may include a plurality of spacing members 42.

The spacing members 42 protrude from the cover main body 41. The spacing members 42 may protrude from the cover facing surface 411 in the first direction (the FD arrow direction). When the cover 4 and the module case 3 are coupled, the spacing members 42 may be inserted into the accommodation spaces 31. Accordingly, the spacing members 42 may support the bare cells 2 accommodated in the accommodation spaces 31 to be disposed at a position spaced apart from the cover main body 41. Accordingly, the energy storage device 1 according to the present invention can secure additional spaces between the bare cells 2 and the cover main body 41 using the spacing members 42. Accordingly, when gravity acts toward the cover 4 as in a case in which the cover 4 is flipped over to be disposed at the lower side of the module case 3, the energy storage device 1 according to the present invention is implemented so that, even when the electrolyte leaks from the bare cells 2, the leaked electrolyte may be accommodated using the spaces between the bare cells 2 and the cover main body 41. Accordingly, since the energy storage device 1 according to the present invention can reduce the risk of a short circuit and the like occurring due to the electrolyte leaking from the bare cells 2, it is possible to improve product reliability and stability. The spacing members 42 and the cover main body 41 may be formed integrally.

The cover 4 may be implemented so that a plurality of spacing members 42 are inserted into each of the accommodation spaces 31. The spacing members 42 inserted into the accommodation spaces 31 may be disposed to be spaced apart from each other in a second axis direction (a Y-axis direction) perpendicular to the first axis direction (the X-axis direction). Accordingly, the spacing members 42 in the accommodation spaces 31 may support different parts of the bare cells 2. Accordingly, since the energy storage device 1 according to the present invention can reduce shaking, vibration, and the like generated in the bare cells 2 using the spacing members 42, it is possible to improve the stability of the bare cells 2.

The cover 4 may include a plurality of spacing grooves 43.

The spacing grooves 43 are formed in the spacing members 42. The spacing grooves 43 may be formed in one surfaces of the spacing grooves 42 in the first direction (the FD arrow direction). The spacing grooves 43 may be implemented as grooves formed at a certain depth in the one surfaces of the spacing members 42. When the cover 4 and the module case 3 are coupled, parts of the bare cells 2 may be inserted into the spacing grooves 43. Due to the spacing grooves 43, the one surfaces of the spacing members 42 may be formed to have a curved surface corresponding to the circumference of the bare cell 2.

The cover 4 may include a plurality of connection members 44.

The connection members 44 connect the spacing members 42. The connection members 44 may protrude from the cover facing surface 411 in the first direction (the FD arrow direction). The connection members 44 are coupled to both ends of the spacing members 42 inserted into the accommodation spaces 31 so that the connection members 44 may connect the spacing members 42. The spacing members 42 connected by the connection members 44 can support the bare cells 2 more firmly. In this case, both ends of the spacing members 42 are based on the first axis direction (the X-axis direction). Accordingly, the spacing members 42 spaced apart from each other in the second axis direction (the Y-axis direction) may be disposed between the connection members 44 disposed to face each other in the first axis direction (the X-axis direction). The connection members 44 may be disposed parallel to the second axis direction (the Y-axis direction).

The connection members 44 may be inserted into the accommodation spaces 31. In the spacing members 42 and the connection members 44 which are inserted into the accommodation spaces 31, the connection members 44 may serve as both sidewalls of the spacing members 42 in the first axis direction (the X-axis direction). Accordingly, the connection members 44 may guide a coupling position of the cover 4 and the module case 3, thereby improving the ease of coupling the cover 4 to the module case 3. In addition, the connection members 44 may be inserted into the accommodation spaces 31 and supported by the module case 3, thereby restricting the relative movement of the cover 4 with respect to the module case 3. Accordingly, the energy storage device 1 according to the present invention can support the bare cells 2 more stably using the connection members 44. The connection members 44 and the spacing members 42 which are inserted into the accommodation spaces 31 may be formed integrally. The connection members 44, the spacing members 42, and the cover main body 41 may be formed integrally.

Referring to FIGS. 2 to 7, the energy storage device 1 according to the present invention may include a coupling part 5.

The coupling part 5 couples the module case 3 to the cover 4. A coupling strength of the coupling part 5 coupling the module case 3 to the cover 4 affects a pressure resistance strength with respect to each of the accommodation spaces 31. The greater the coupling strength by the coupling part 5, the greater the pressure resistance strength. The pressure resistance strength may be a strength of the module which can withstand an internal pressure in each of the accommodation spaces 31 without damage or breakage.

The coupling part 5 may couple the module case 3 to the cover 4 through welding using a laser. The coupling part 5 may be melted by a laser radiated from an upper side of the cover 4 to couple the module case 3 to the cover 4.

The coupling part 5 may be coupled to the module case 3 to protrude from a module facing surface 30a of the module main body 30 in the second direction (the SD arrow direction). The module facing surface 30a may be a surface of the module main body 30, which faces the cover facing surface 411. The coupling part 5 and the module main body 30 may be formed integrally.

Here, the energy storage device 1 according to the present invention may be implemented so that the module case 3 and the cover 4 can be more firmly coupled through the coupling part 5, thereby improving pressure resistance performance and anti-explosion performance through the increase in the pressure resistance strength. To this end, the cover 4 and the coupling part 5 may be implemented as follows.

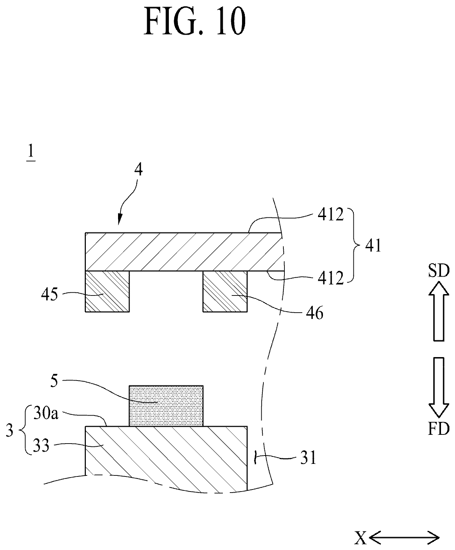

Referring to FIGS. 2 to 11, the cover 4 may include an outer wall member 45 and an inner wall member 46.

The outer wall member 45 protrudes from the cover facing surface 411 in the first direction (the FD arrow direction). When the cover 4 and the module case 3 are coupled, the outer wall member 45 may be disposed outside the coupling part 5. Accordingly, the outer wall member 45 may support the coupling part 5 outside the coupling part 5. The outer wall member 45 and the cover main body 41 may be formed integrally.

The inner wall member 46 protrudes from the cover facing surface 411 in the first direction (the FD arrow direction). The inner wall member 46 may be disposed to be spaced apart from the outer wall member 45. When the cover 4 and the module case 3 are coupled, the inner wall member 46 may be disposed inside the coupling part 5. Accordingly, the inner wall member 46 may support the coupling part 5 inside the coupling part 5. The inner wall member 46 and the cover main body 41 may be formed integrally.

When the inner wall member 46 and the outer wall member 45 are provided, the coupling part 5 may include a first coupling member 51. The first coupling member 51 is disposed between the inner wall member 46 and the outer wall member 45 to couple the cover 4 to the module case 3. The first coupling member 51 may correspond to a part of the coupling part 5. When the cover 4 and the module case 3 are coupled, the first coupling member 51 may be supported by each of the inner wall member 46 and the outer wall member 45. Accordingly, since the energy storage device 1 according to the present invention may restrict the movable distance of the first coupling member 51 using the inner wall member 46 and the outer wall member 45, the first coupling member 51 can firmly maintain a state of coupling the cover 4 to the module case 3. Accordingly, the energy storage device 1 according to the present invention may increase the pressure resistance strength through the increase in the coupling strength by the first coupling member 51, thereby improving pressure resistance performance and anti-explosion performance. Meanwhile, the inner wall member 46 may support the first coupling member 51 inside the first coupling member 51. The outer wall member 45 may support the first coupling member 51 outside the first coupling member 51.

The inner wall member 46 and the outer wall member 45 may support a first coupling resin formed by melting the first coupling member 51, thereby restricting a flowable distance of the first coupling resin. Accordingly, the first coupling resin may be cured while having a flow restricted by the inner wall member 46 and the outer wall member 45 to more firmly couple the cover 4 to the module case 3. Accordingly, the energy storage device 1 according to the present invention may further increase the coupling strength by the first coupling member 51, thereby further improving pressure resistance performance and anti-explosion performance. Meanwhile, the first coupling member 51 may be melted by a laser while disposed between the inner wall member 46 and the outer wall member 45 to become the first coupling resin. Thereafter, since the first coupling resin is cured between the inner wall member 46 and the outer wall member 45 back to become the first coupling member 51, the cover 4 and the module case 3 can be firmly coupled by the first coupling member 51. The first coupling member 51 may be a size to fill a space between the inner wall member 46 and the outer wall member 45.

The inner wall member 46 may be disposed to be spaced inward from the outer wall member 45. When the cover 4 and the module case 3 are coupled, the inner wall member 46 may be disposed at a position spaced a shorter distance from the accommodation spaces 31 than the outer wall member 45. The outer wall member 45 may be disposed to surround a portion of the cover facing surface 411, which covers the accommodation spaces 31. Accordingly, when the cover 4 and the module case 3 are coupled, all of the accommodation spaces 31 may be disposed inside the outer wall member 45. The outer wall member 45 may be formed in a ring shape of which an entire interior is empty. For example, the outer wall member 45 may be formed in a quadrangular ring shape with a curved corner. The outer wall member 45 may be formed in the same shape as a side surface of the cover main body 41.

In this case, the first coupling member 51 may be portions of the coupling part 5, which are disposed parallel to the first axis direction (the X-axis direction). The portions of the coupling part 5, which correspond to the first coupling member 51, may be disposed to be spaced apart from each other in the second axis direction (the Y-axis direction). When the first coupling member 51 is disposed between the inner wall member 46 and the outer wall member 45, an outer surface of the first coupling member 51 may be in contact with an inner surface of the outer wall member 45. In this case, the inner surface of the outer wall member 45 may be inner surfaces of the portions of the outer wall member 45, which are disposed parallel to the first axis direction (the X-axis direction). An inner surface of the first coupling member 51 may be in contact with an outer surface of the inner wall member 46. In this case, the outer surface of the inner wall member 46 may be outer surfaces of the portions of the inner wall member 46, which are disposed parallel to the first axis direction (the X-axis direction). The first coupling member 51 may protrude from the sidewall member 33 in the second direction (the SD arrow direction).

Referring to FIGS. 2 to 11, in the energy storage device 1 according to the present invention, a second coupling member 52 of the coupling part 5 may be implemented to be supported by the connection members 44.

The second coupling member 52 couples the cover 4 to the module case 3. The second coupling member 52 may correspond to a part of the coupling part 5. The second coupling member 52 may be portions of the coupling part 5, which are disposed parallel to the second axis direction (the Y-axis direction). The portions of the coupling part 5, which correspond to the second coupling member 52, may be disposed to be spaced apart from each other in the first axis direction (the X-axis direction). The second coupling member 52 and the first coupling member 51 may be connected. **In** this case, the second coupling member 52 and the first coupling member 51 may be connected to be formed in a ring shape of which an entire interior is empty. For example, the second coupling member 52 and the first coupling member 51 may be connected to be formed in a quadrangular ring shape with a curved corner. The second coupling member 52 and the first coupling member 51 may be formed to have the same shape as the outer wall member 45 and a smaller size than the outer wall member 45. Accordingly, an outer surface of the second coupling member 52 and the outer surface of the first coupling member 51 may be in contact with the inner surface of the outer wall member 45. The second coupling member 52 may protrude from the sidewall member 33 in the second direction (the SD arrow direction).

When the second coupling member 52 is provided, the cover 4 may include first spacing members 421 and first connection members 441. The first spacing members 421 may correspond to some of the spacing members 42. The first spacing members 421 may be disposed at positions of the accommodation spaces 31, which correspond to the first accommodation spaces 311. The first connection members 441 connect both ends of the first spacing members 421 among the connection members 44 in the first axis direction (the X-axis direction). The second coupling member 52 may be disposed between the first connection member 441 spaced the shortest distance from the outer wall member 45 in the first axis direction (the X-axis direction) [hereinafter referred to as "a first adjacent connection member 441"]] among the first connection members 441 and the outer wall member 45 to couple the cover 4 to the module case 3. Accordingly, the second coupling member 52 may be supported by each of the first adjacent connection member 441 and the outer wall member 45. Accordingly, since the energy storage device 1 according to the present invention may restrict a movable distance of the second coupling member 52, the second coupling member 52 can firmly maintain a state of coupling the cover 4 to the module case 3. Accordingly, the energy storage device 1 according to the present invention may increase the pressure resistance strength through the increase in the coupling strength by the second coupling member 52, thereby improving pressure resistance performance and anti-explosion performance. Meanwhile, the outer surface of the second coupling member 52 may be supported by an inner surface of a portion of the outer wall member 45, which is disposed parallel to the second axis direction (the Y-axis direction). The inner surface of the second coupling member 52 may be supported by an outer surface of the first adjacent connection member 441.

The first adjacent connection member 441 and the outer wall member 45 may support a second coupling resin formed by melting the second coupling member 52, thereby restricting a flowable distance of the second coupling resin. Accordingly, the second coupling resin may be cured while having a flow restricted by the first adjacent connection member 441 and the outer wall member 45 to more firmly couple the cover 4 to the module case 3. Accordingly, the energy storage device 1 according to the present invention may further increase the coupling strength by the second coupling member 52, thereby further improving pressure resistance performance and anti-explosion performance. Meanwhile, the second coupling member 52 may be melted by a laser while disposed between the first adjacent connection member 441 and the outer wall member 45 to become the second coupling resin. Thereafter, since the second coupling resin is cured between the first adjacent connection member 441 and the outer wall member 45 to become the second coupling member 52, the cover 4 and the module case 3 can be firmly coupled by the second coupling member 52. The second coupling member 52 may be sized to fill a space between the first adjacent connection member 441 and the outer wall member 45.

Meanwhile, the first accommodation space 311 may be disposed at the outermost position among the accommodation spaces 31 in the first axis direction (the X-axis direction). For example, two accommodation spaces 31 disposed at both ends in the first axis direction (the X-axis direction) among the accommodation spaces 31 may correspond to the first accommodation space 311. In this case, two portions of the coupling part 5, which are disposed at both ends in the first axis direction (the X-axis direction), may correspond to the second coupling member 52. Two sets of spacing members 42 disposed at both ends in the first axis direction (the X-axis direction) among the spacing members 42 may correspond to the first spacing members 421. The connection members 44 connecting both ends of each of the first spacing members 421 in the first axis direction (the X-axis direction) among the connection members 44 may correspond to the first connection members 441. Accordingly, each of two portions of the coupling part 5, which correspond to the second coupling member 52, may be disposed between the first adjacent connection member 441 and the outer wall member 45 in the first axis direction (the X-axis direction).

Here, a part of the second coupling member 52 may be supported by the first adjacent connection member 441, and the rest may be supported by the first inner wall members 461 among the inner wall members 46.

The first inner wall members 461 may be disposed to be spaced apart from each other in the second axis direction (the Y-axis direction). The first spacing members 421 may be disposed between the first inner wall members 461 in the second axis direction (the Y-axis direction). Each of the first inner wall members 461 may include a first supporting inner wall 461a and a plurality of first supporting sidewalls 461b.

Each of the first supporting inner walls 461a is spaced apart from the outer wall member 45 in the second axis direction (the Y-axis direction). Each of the first supporting inner walls 461a and the outer wall member 45 may support the first coupling member 51 in the second axis direction (the Y-axis direction). **In** this case, the first coupling member 51 may be supported by a portion of the outer wall member 45, which is disposed parallel to the first axis direction (the X-axis direction), and the first supporting inner walls 461a. Each of the first supporting inner walls 461a may correspond to a portion of the first inner wall member 461, which is disposed parallel to the first axis direction (the X-axis direction).

The first supporting sidewalls 461b may be formed so that one side is connected to both ends of the first supporting inner wall 461a and the other side extends toward the first connection members 441. One side of the second coupling resin may be supported by the outer wall member 45. In this case, the one side of the second coupling resin may be supported by a portion of the outer wall member 45, which is disposed parallel to the second axis direction (the Y-axis direction). A part of the other side of the second coupling resin may be supported by the first adjacent connection member 441, and the rest may be supported by the first supporting sidewall 461b spaced the shortest distance from the outer wall member 45 in the first axis direction (the X-axis direction) [hereinafter referred to as a "first adjacent supporting sidewall 461b"]] among the first supporting sidewalls 461b. Accordingly, the energy storage device 1 according to the present invention may be implemented so that the second coupling member 52 firmly couples the cover 4 to the module case 3 due to the curing of the second coupling resin by restricting the flowable distance of the second coupling resin using the outer wall member 45, the first adjacent connection member 441, and the first adjacent supporting sidewall 461b. In this case, the outer surface of the second coupling member 52 may be supported by the inner surface of the outer wall member 45. The inner surface of the second coupling member 52 may be supported by the outer surface of the first adjacent connection member 441 and an outer surface of the first adjacent supporting sidewall 461b. The outer surface of the first adjacent connection member 441 and the outer surface of the first adjacent supporting sidewall 461b may be disposed on a virtual reference line parallel to the second axis direction (the Y-axis direction). Accordingly, the outer surface of the first adjacent connection member 441 and the outer surface of the first adjacent supporting sidewall 461b may be disposed to form a single surface.

Referring to FIGS. 2 to 12, in the energy storage device 1 according to the present invention, a third coupling member 53 of the coupling part 5 may be implemented to be supported by the connection members 44.

The third coupling member 53 couples the cover 4 to the module case 3. The third coupling member 53 may correspond to a part of the coupling part 5. The third coupling member 53 may correspond to a portion of the coupling part 5, which is parallel to the second axis direction (the Y-axis direction) and is disposed between the second coupling members 52. When the third coupling member 53 is implemented as a plurality of portions of the coupling part 5, the portions corresponding to the third coupling member 53 may be disposed to be spaced apart from each other in the first axis direction (the X-axis direction). The third coupling member 53 may protrude from the sidewall member 34 in the second direction (the SD arrow direction). Both ends of the portion corresponding to the third coupling member 53 may be connected to portions corresponding to the first coupling member 51 in the second axis direction (the Y-axis direction).

When the third coupling member 53 is provided, the cover 4 may include second spacing members 422 and second connection members 442. The second spacing members 422 may correspond to some of the spacing members 42. The second spacing members 422 may be disposed at positions of the accommodation spaces 31, which correspond to the second accommodation spaces 312. The second connection members 442 connect both ends of the second spacing members 422 among the connection members 44 in the first axis direction (the X-axis direction). The third coupling member 53 may be disposed between the first connection member 441 [hereinafter referred to as a "first facing connection member 441"]] and the second connection member 442 [hereinafter referred to as a "second facing connection member 442"]], which are disposed to face each other in the first axis direction (the X-axis direction), to couple the cover 4 to the module case 3. Accordingly, the third coupling member 53 may be supported by each of the first facing connection member 441 and the second facing connection member 442. Accordingly, since the energy storage device 1 according to the present invention may restrict a movable distance of the third coupling member 53, the third coupling member 53 can firmly maintain a state of coupling the cover 4 to the module case 3. Accordingly, the energy storage device 1 according to the present invention may increase the pressure resistance strength through the increase in the coupling strength by the third coupling member 53, thereby improving pressure resistance performance and anti-explosion performance. Meanwhile, the first facing connection member 441 and the second facing connection member 442 may be adjacent connection members, which are spaced the shortest distance from each other in the first axis direction (the X-axis direction) among the first connection members 441 and the second connection members 442. One side surface of the third coupling member 53 may be supported by the first facing connection member 441, and the other side surface of the third coupling member 53 may be supported by the second facing connection member 442 in the first axis direction (the X-axis direction).

The first facing connection member 441 and the second facing connection member 442 may support the third coupling resin formed by melting the third coupling member 53, thereby restricting a flowable distance of the third coupling resin. Accordingly, the third coupling resin may be cured while having a flow restricted by the first facing connection member 441 and the second facing connection member 442 to more firmly couple the cover 4 to the module case 3. Accordingly, the energy storage device 1 according to the present invention may further increase the coupling strength by the third coupling member 53, thereby further improving pressure resistance performance and anti-explosion performance. Meanwhile, the third coupling member 53 may be melted by a laser while disposed between the first facing connection member 441 and the second facing connection member 442 to become the third coupling resin. Thereafter, since the third coupling resin is cured between the first facing connection member 441 and the second facing connection member 442 back to become the third coupling member 53, the cover 4 and the module case 3 can be firmly coupled by the third coupling member 53. The third coupling member 53 may be sized to fill a space between the first facing connection member 441 and the second facing connection member 442.

Meanwhile, the second accommodation space 312 may be disposed at an inner position among the accommodation spaces 31 in the first axis direction (the X-axis direction). For example, a portion disposed between the first accommodation spaces 311 in the first axis direction (the X-axis direction) among the accommodation spaces 31 may correspond to the second accommodation space 312. In this case, a portion of the coupling part 5, which is disposed between the portions corresponding to the second coupling members 52 in the first axis direction (the X-axis direction), may correspond to the third coupling member 53. Portions of the spacing members 42, which are disposed between the first spacing members 421 in the first axis direction (the X-axis direction), may correspond to the second spacing members 422. The connection members 44 connecting both ends of each of the second spacing members 422 in the first axis direction (the X-axis direction) among the connection members 44 may correspond to the second connection members 442. The second accommodation space 312 may be provided as a plurality of second accommodation spaces. **In** this case, the third coupling member 53 disposed between the second accommodation spaces 312 in the first axis direction (the X-axis direction) may be supported by the second facing connection members 442 disposed to face each other.

Here, a part of the third coupling member 53 may be supported by the first facing connection member 441 and the second facing connection member 442, and the rest may be supported by the second inner wall member 462 among the inner wall members 46.

The second inner wall members 462 may be disposed to be spaced apart from each other in the second axis direction (the Y-axis direction). The second spacing members 422 may be disposed between the second inner wall members 462 in the second axis direction (the Y-axis direction). Each of the second inner wall members 462 may include a second supporting inner wall 462a and a plurality of second supporting sidewalls 462b.

Each of the second supporting inner walls 462a is spaced apart from the outer wall member 45 in the second axis direction (the Y-axis direction). Each of the second supporting inner walls 462a and the outer wall member 45 may support the first coupling member 51 in the second axis direction (the Y-axis direction). **In** this case, the first coupling member 51 may be supported by a portion of the outer wall member 45, which is disposed parallel to the first axis direction (the X-axis direction), and the second supporting inner walls 462a. Each of the second supporting inner walls 462a may correspond to a portion of the second inner wall member 462, which is disposed parallel to the first axis direction (the X-axis direction).

The second supporting sidewalls 462b may be formed so that one side is connected to both ends of the second supporting inner wall 462a and the other side extends toward the second connection members 442. The third coupling resin may be supported by the first supporting sidewall 461b [hereinafter referred to as a "first facing supporting sidewall 461b"]] and the second supporting sidewall 462b [hereinafter referred to as a "second facing supporting sidewall 462b"]], which are disposed to face each other. The first facing supporting sidewall 461b and the second facing supporting sidewall 462b may be adjacent supporting sidewalls, which are spaced the shortest distance from each other in the first axis direction (the X-axis direction) among the first supporting sidewalls 461b and the second supporting sidewalls 462b. **In** this case, a part of one side of the third coupling resin may be supported by the first facing connection member 441 and the rest may be supported by the first facing supporting sidewall 461b. A part of the other side of the third coupling resin may be supported by the second facing connection member 442, and the rest may be supported by the second facing supporting sidewall 462b. Accordingly, the energy storage device 1 according to the present invention may be implemented so that the third coupling member 53 firmly couples the cover 4 to the module case 3 due to the curing of the third coupling resin by restricting the flowable distance of the third coupling resin using the first facing connection member 441, the first facing supporting sidewall 461b, the second facing connection member 442, and the second facing supporting sidewall 462b.

**In** this case, one side surface of the third coupling member 53 may be supported by an outer surface of the first facing connection member 441 and an outer surface of the first facing supporting sidewall 461b. The outer surface of the first facing connection member 441 and the outer surface of the first facing supporting sidewall 461b may be disposed on the virtual reference line parallel to the second axis direction (the Y-axis direction). Accordingly, the outer surface of the first facing connection member 441 and the outer surface of the first facing supporting sidewall 461b may be disposed to form a single surface. The other side surface of the third coupling member 53 may be supported by an outer surface of the second facing connection member 442 and an outer surface of the second facing supporting sidewall 462b. The outer surface of the second facing connection member 442 and the outer surface of the second facing supporting sidewall 462b may be disposed on the virtual reference line parallel to the second axis direction (the Y-axis direction). Accordingly, the outer surface of the second facing connection member 442 and the outer surface of the second facing supporting sidewall 462b may be disposed to form a single surface.

Meanwhile, when the second accommodation space 312 is provided as a plurality of second accommodation spaces, the third coupling member 53 disposed between the second accommodation spaces 312 in the first axis direction (the X-axis direction) may be supported by the second facing connection members 442 disposed to face each other and the second facing supporting sidewalls 462b disposed to face each other.

Meanwhile, the energy storage device 1 according to the present invention may be formed so that the outer wall member 45 forms a ring shape along an outermost edge of the cover main body 41, and thus, when the cover 4 and the module case 3 are coupled, the outer wall member 45 may be implemented to form a closed shape. In addition, the energy storage device 1 according to the present invention may be formed so that the inner wall member 46 and the connection member 44 form a ring shape along an edge of each of the accommodation spaces 31, and thus, when the cover 4 and the module case 3 are coupled, the inner wall member 46 and the connection member 44 may be implemented to form a closed shape for each of the accommodation spaces 31. Through the structure of the outer wall member 45, the inner wall member 46, and the connection member 44, the energy storage device 1 according to the present invention can completely individually separate the accommodation spaces 31, thereby preventing the electrolyte from moving between the accommodation spaces 31. Furthermore, the effect of doubly preventing the electrolyte from leaking from the inside to the outside of the energy storage device 1 according to the present invention can be achieved.

Here, the outer wall member 45 and the inner wall members 46 may be formed symmetrically based on a first symmetry line of the cover main body 41 in the first axis direction (the X-axis direction). The first symmetry line of the cover main body 41 may be disposed parallel to the second axis direction (the Y-axis direction) at a position spaced the same distance from both ends of the cover main body 41 in the first axis direction (the X-axis direction). The outer wall member 45 and the inner wall members 46 may be formed symmetrically based on a second symmetry line of the cover main body 41 in the second axis direction (the Y-axis direction). The second symmetry line of the cover main body 41 may be disposed parallel to the first axis direction (the X-axis direction) at a position spaced the same distance from both ends of the cover main body 41 in the second axis direction (the Y-axis direction).

In addition, the coupling part 5 may be formed symmetrically based on a first symmetry line of the module main body 30 in the first axis direction (the X-axis direction). The first symmetry line of the module main body 30 may be disposed parallel to the second axis direction (the Y-axis direction) at a position spaced the same distance from both ends of the module main body 30 in the first axis direction (the X-axis direction). The coupling part 5 may be formed symmetrically based on a second symmetry line of the module main body 30 in the second axis direction (the Y-axis direction). The second symmetry line of the module main body 30 may be disposed parallel to the first axis direction (the X-axis direction) at a position spaced the same distance from both ends of the module main body 30 in the second axis direction (the Y-axis direction).

In this way, since the outer wall member 45, the inner wall members 46, and the coupling part 5 are formed symmetrically based on the symmetry lines in the first axis direction (the X-axis direction) and the second axis direction (the Y-axis direction), the energy storage device 1 according to the present invention may couple the cover 4 to the module case 3 with an overall uniform coupling strength using the coupling part 5. Accordingly, the energy storage device 1 according to the present invention can implement an overall uniform coupling strength, thereby improving pressure resistance performance and anti-explosion performance.

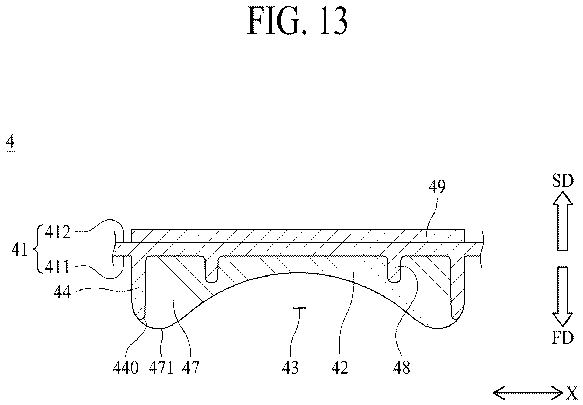

Referring to FIGS. 2 to 13, in the energy storage device 1 according to the present invention, the cover 4 may be implemented to support the bare cells 2 accommodated in the module case 3. To this end, the cover 4 may include a plurality of spacing protrusions 47.

The spacing protrusions 47 may be formed on each of the spacing members 42. The spacing protrusions 47 may protrude in the first direction (the FD arrow direction) from both sides of the spacing groove 43 formed in each of the spacing members 42 in the first axis direction (the X-axis direction). Accordingly, each of the spacing protrusions 47 can reduce shaking, vibration, and the like generated in the bare cell 2 by restricting a movable distance of the bare cell 2 inserted into the spacing groove 43 in the first axis direction (the X-axis direction). Accordingly, the energy storage device 1 according to the present invention can improve the stability of the bare cells 2 using the spacing protrusions 47.

Each of the spacing protrusions 47 may include a protrusion surface 471. The protrusion surfaces 471 are surfaces of the spacing protrusions 47 disposed to be oriented in the first direction (the FD arrow direction). The protrusion surfaces 471 may be formed to form a curved surface of which a center of curvature is disposed in the second direction (the SD arrow direction). That is, the protrusion surface 471 may form a convex surface in the first direction (the FD arrow direction). Accordingly, the energy storage device 1 according to the present invention can achieve the following operation effects.

First, in the case of a comparative example in which each of the spacing protrusions 47 protrudes in the first direction (the FD arrow direction) to form a sharp tip, there is a problem that there is a high risk of damage or breakage by sharp portions of the spacing protrusions 47 as the bare cell 2 expands during use.

Next, in the case of the embodiment in which the protrusion surface 471 of each of the spacing protrusions 47 forms a convex surface in the first direction (the FD arrow direction), even when the bare cell 2 expands during use and is in contact with the protrusion surfaces 471, the risk of damage or breakage of the bare cell 2 caused by the protrusion surfaces 471 can be reduced.

In this way, the energy storage device 1 according to the present invention is implemented so that, even when the bare cell 2 expands during use, the risk of damage or breakage of the bare cell 2 can be reduced using the curved protrusion surfaces 471. Accordingly, the energy storage device 1 according to the present invention can not only increase the maintenance cycle for the bare cells 2 but also reduce the maintenance cost for the bare cells 2.

When the spacing protrusions 47 are provided, each of the connection members 44 may protrude from the cover facing surface 411 in the first direction (the FD arrow direction) with a shorter length than each of the spacing protrusions 47. Accordingly, the energy storage device 1 according to the present invention can reduce the possibility of the bare cell 2 in contact with the connection members 44 even when the bare cell 2 expands during use. Accordingly, the energy storage device 1 according to the present invention can reduce the possibility of the bare cell 2 in contact with the connection members 44 during use.

When the spacing protrusions 47 are provided, a connection surface 440 of each of the connection members 44 may be formed to form a curved surface of which a center of curvature is disposed in the second direction (the SD arrow direction). That is, the connection surfaces 440 may form a convex curved surface in the first direction (the FD arrow direction). Accordingly, the energy storage device 1 according to the present invention can reduce the risk of damage or breakage of the bare cell 2 caused by the connection surfaces 440 even when the bare cell 2 expands during use and is in contact with the connection surfaces 440.

Referring to FIGS. 2 to 13, the cover 4 may include a plurality of reinforcing members 48.

The reinforcing members 48 connect the spacing members 42. The reinforcing members 48 may connect the spacing members 42 disposed to be spaced apart from each other in the second axis direction (the Y-axis direction). For example, the first spacing members 421 and the second spacing members 422 may be connected by different reinforcing members 48. The reinforcing members 48 may connect the spacing members 42 disposed to be spaced apart from each other in the second axis direction (the Y-axis direction) along with the connection members 44. Accordingly, the energy storage device 1 according to the present invention can support the bare cells 2 more firmly using the spacing members 42. The reinforcing members 48 may be disposed parallel to the second axis direction (the Y-axis direction). The reinforcing members 48 may be disposed to be spaced apart from each other in the first axis direction (the X-axis direction).

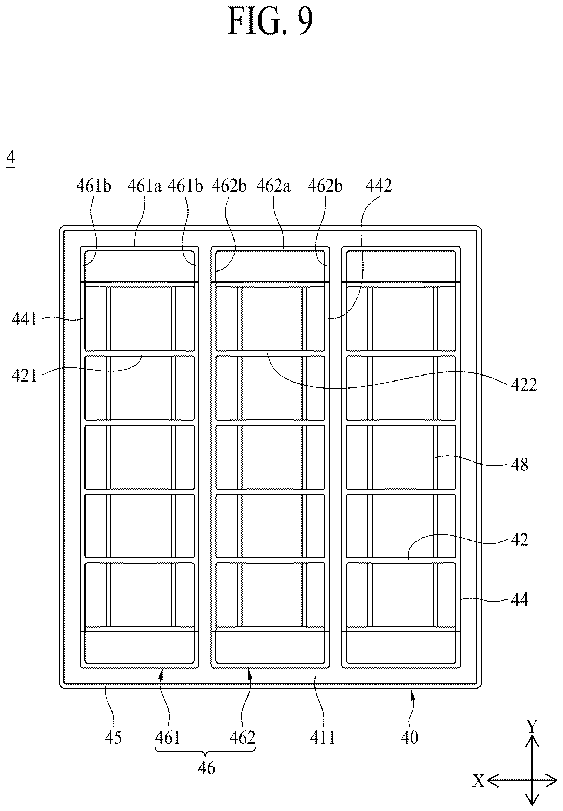

The reinforcing members 48 may be disposed between the connection members 44 connecting both ends of the spacing members 42 in the first axis direction (the X-axis direction). For example, different reinforcing members 48 may be disposed between the first connection members 441 and the second connection members 442 in the first axis direction (the X-axis direction). Accordingly, the energy storage device 1 according to the present invention can further increase the strength of the spacing members 42 using the reinforcing members 48 and the connection members 44, thereby improving the supporting stability for the bare cells 2. FIG. 9 illustrates the two reinforcing members 48 disposed between the connection members 44 connecting both ends of the spacing members 42 in the first axis direction (the X-axis direction), but the present invention is not limited thereto, and three or more reinforcing members 48 may be disposed.

Each of the reinforcing members 48 may protrude from the cover facing surface 411 in the first direction (the FD arrow direction). Each of the reinforcing members 48 may protrude from the cover facing surface 411 in the first direction (the FD arrow direction) with a shorter length than each of the connection members 44. Accordingly, the energy storage device 1 according to the present invention can reduce the degree of interference between the bare cells 2 inserted into the spacing grooves 43 and the reinforcing members 48. The reinforcing members 48 may be implemented not to protrude toward the spacing grooves 43. In this case, each of the reinforcing members 48 may protrude from the cover facing surface 411 in the first direction (the FD arrow direction) with a shorter length than each of the spacing members 42.

Referring to FIGS. 2 to 13, the cover 4 may include a plurality of protrusion members 49.

The protrusion members 49 protrude from the outer cover surface 412 in the second direction (the SD arrow direction). Since the protrusion members 49 protrude from the outer cover surface 412, the thicknesses of portions of the cover main body 41 in which the protrusion members 49 are formed can be increased. Accordingly, the energy storage device 1 according to the present invention can increasing the strength of the cover main body 41 using the protrusion members 49, thereby further improving pressure resistance performance and anti-explosion performance. Here, the thickness may be a length in the first direction (the FD arrow direction).

The protrusion members 49 may be disposed at positions one-to-one corresponding to the accommodation spaces 31. Accordingly, the protrusion members 49 may be disposed at portions which directly affect the pressure resistance strengths of the accommodation spaces 31. In addition, since the protrusion member 49 protrudes from the outer cover surface 412 in the second direction (the SD arrow direction) at the positions one-to-one corresponding to the accommodation spaces 31, the pressure resistance strengths of the accommodation spaces 31 can be increased without affecting the volumes of the accommodation spaces 31. A horizontal cross section of each of the protrusion members 49 may be formed to have a shape and size which are substantially the same as a horizontal cross section of each of the accommodation spaces 31. Here, the horizontal cross section is based on a horizontal plane in which the first axis direction (the X-axis direction) and the second axis direction (the Y-axis direction) are disposed.

Here, the module case 3 may be implemented so that the bare cell 2 is disposed at a position spaced apart from the floor member 32. To this end, the module case 3 may include a plurality of supporting members 35.

The supporting members 35 protrude from the floor member 32. The supporting members 35 may protrude from the floor member 32 in the second direction (the SD arrow direction) in each of the accommodation spaces 31. Accordingly, the supporting members 35 may support the bare cells 2 so that the bare cells 2 are disposed at positions of the accommodation spaces 31, which are spaced apart from the floor member 32. Accordingly, the energy storage device 1 according to the present invention can secure additional spaces between the bare cells 2 and the floor member 32 using the supporting members 35. Accordingly, when gravity acts toward the floor member 32, the energy storage device 1 according to the present invention is implemented so that, even when the electrolyte leaks from the bare cells 2, the leaked electrolyte may be accommodated using the spaces between the bare cells 2 and the floor member 32. Accordingly, since the energy storage device 1 according to the present invention can reduce the risk of a short circuit and the like occurring due to the electrolyte leaking from the bare cells 2, it is possible to further improve product reliability and stability.

Each of the supporting members 35 may include a supporting groove 351 and a supporting surface 352.

The bare cell 2 may be inserted into the supporting groove 351. The supporting groove 351 may be implemented as a groove formed at a certain depth in the supporting member 35. A part of the bare cell 2 accommodated in the accommodation space 31 may be inserted into the supporting groove 351.

The supporting surface 352 may be in contact with the bare cell 2 inserted into the supporting groove 351. The supporting surface 352 is a surface disposed to face the supporting groove 351. The supporting surface 352 may be formed to have a curved surface corresponding to the circumference of the bare cell 2. Accordingly, the supporting surface 352 may support the bare cell 2 inserted into the supporting groove 351, thereby restricting the movable distance of the bare cell 2. Accordingly, the supporting surface 352 can reduce vibration, shaking, and the like generated in the bare cell 2.

A plurality of supporting members 35 may be inserted into each of the accommodation spaces 31. **In** this case, the supporting members 35 may be disposed to be spaced apart from each other in the second axis direction (the Y-axis direction) in each of the accommodation spaces 31. Accordingly, the supporting members 35 inserted into each of the accommodation spaces 31 may support different portions of the bare cell 2 and thus support the bare cell 2 more stably.

Each of the supporting members 35 may be formed to have the same length as the accommodation space 31 in the first axis direction (the X-axis direction). Accordingly, both ends of the supporting members 35 may be coupled to the sidewall member 33 and the partition member 34 or coupled to the partition members 34 in the first axis direction (the X-axis direction). Accordingly, the energy storage device 1 according to the present invention may reinforce the supporting forces of the supporting members 35 using the sidewall member 33 and the partition member 34 and thus may be implemented to support the bare cells 2 more stably using the supporting members 35.

The module case 3 may include a plurality of reinforcing protrusions 36.

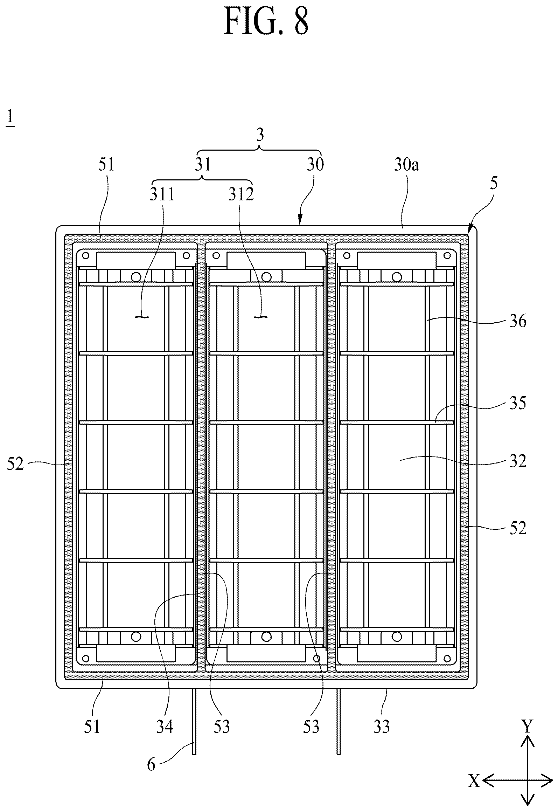

The reinforcing protrusions 36 connect the supporting members 35. The reinforcing protrusions 36 may connect the supporting members 35 disposed to be spaced apart from each other in the second axis direction (the Y-axis direction). That is, the supporting members 35 disposed in each of the accommodation spaces 31 may be connected by the reinforcing protrusions 36. Accordingly, the energy storage device 1 according to the present invention can support the bare cells 2 more firmly using the supporting members 35. The reinforcing protrusions 36 may be disposed parallel to the second axis direction (the Y-axis direction). The reinforcing protrusions 36 may be disposed to be spaced apart from each other in the first axis direction (the X-axis direction). The reinforcing protrusions 36 may be disposed between both ends of the supporting members 35 in the first axis direction (the X-axis direction). FIG. 8 illustrates two reinforcing protrusions 36 disposed in each of the accommodation spaces 31, but the present invention is not limited thereto, and three or more reinforcing protrusions 36 may be disposed in each of the accommodation spaces 31.

Each of the reinforcing protrusions 36 may protrude from the floor member 32 in the second direction (the SD arrow direction). Each of the reinforcing protrusions 36 may protrude from the floor member 32 in the second direction (the SD arrow direction) with a shorter length than each of the supporting members 35. Accordingly, the reinforcing protrusions 36 may be implemented not to protrude toward the supporting grooves 351. Accordingly, the energy storage device 1 according to the present invention can prevent the bare cells 2 inserted into the supporting grooves 351 and the reinforcing protrusions 36 from interfering with each other.

Referring to FIGS. 2 to 13, the energy storage device 1 according to the present invention may include an external terminal 6.

The external terminal 6 is electrically connected to at least one of the bare cells 2. The external terminal 6 may be formed of a conductive material. One side of the external terminal 6 may be electrically connected to at least one of the bare cells 2 inside the module case 3. The other side of the external terminal 6 may be disposed outside the module case 3. The other side of the external terminal 6 may be electrically connected to another energy storage device 1 outside the module case 3. The other side of the external terminal 6 may be electrically connected to an external device (not illustrated) outside the module case 3. The external device performs a predetermined operation on the bare cells 2 through the external terminal 6. For example, the external device may be a management device for managing power. The external device may be a detection device for performing a monitoring operation for monitoring the voltages and the like of the bare cells 2, a balancing operation for adjusting the voltages and the like of the bare cells 2, and the like. The external terminal 6 may be coupled to the module case 3 through insert molding.

The other side of the external terminal 6 may be formed in a plate shape which is upright parallel to the first direction (the FD arrow direction). Accordingly, when a plurality of energy storage devices 1 according to the present invention are provided and disposed to be stacked, it is possible to improve the ease of an operation of electrically connecting the energy storage devices 1 according to the present invention in series through the other sides of the external terminals 6 which are upright parallel to the first direction (the FD arrow direction).

Referring to FIGS. 2 to 16, the energy storage device 1 according to the present invention may include a first external terminal 61 and a second external terminal 62.

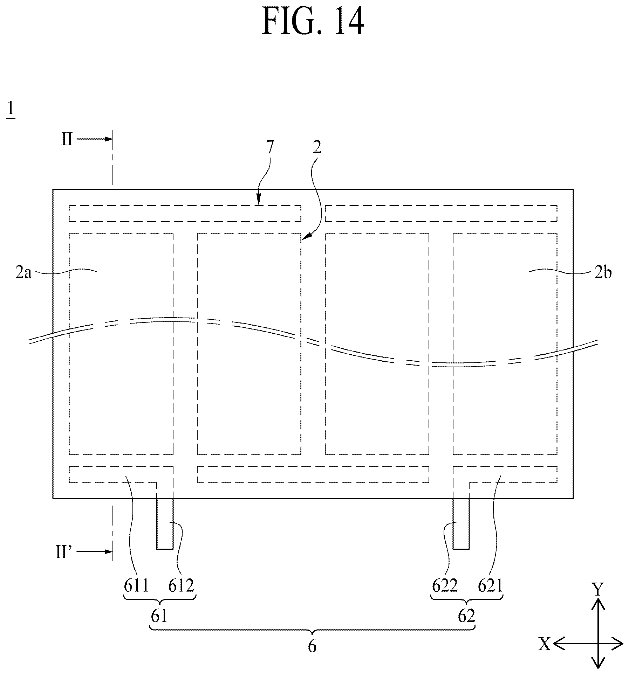

The first external terminal 61 may be electrically connected to a first bare cell 2a among the bare cells 2. The first bare cell 2a may be one of the bare cells 2 disposed at both ends in the first axis direction (the X-axis direction). For example, based on FIG. 14, the first bare cell 2a may be disposed at the leftmost side among the bare cells 2. Meanwhile, the first external terminal 61 may be coupled to the module case 3 through insert molding.

The first external terminal 61 may include a first external terminal main body 611 and a first withdrawal member 612.

The first external terminal main body 611 may be electrically connected to the first bare cell 2a. The first external terminal main body 611 may be disposed inside the module case 3. The first external terminal main body 611 may correspond to one side of the external terminal 6.

The first withdrawal member 612 may be disposed outside the module case 3. The first withdrawal member 612 may be electrically connected to the external device or another energy storage device 1 outside the module case 3. The first withdrawal member 612 may be formed in a plate shape which is upright parallel to the first direction (the FD arrow direction). Accordingly, when a plurality of energy storage devices 1 according to the present invention are provided and disposed to be stacked, it is possible to improve the ease of the operation of electrically connecting the energy storage devices 1 according to the present invention in series. The first withdrawal member 612 may be coupled to the first external terminal main body 611. The first withdrawal member 612 and the first external terminal main body 611 may be formed integrally.

Based on FIG. 14, when the first external terminal 61 is electrically connected to the first bare cell 2a disposed at the leftmost side among the bare cells 2, the first withdrawal member 612 may be disposed at the right side of the first external terminal main body 611.

The first external terminal 61 may include a first protrusion member 613.

The first protrusion member 613 may protrude from an upper portion of the first external terminal main body 611 toward the sidewall member 33. An insertion groove (not illustrated) into which the first protrusion member 613 is inserted may be formed in the sidewall member 33. In this case, the first protrusion member 613 may be inserted into the insertion groove.

The second external terminal 62 may be electrically connected to a second bare cell 2b among the bare cells 2. The second bare cell 2b may be one of the bare cells 2 disposed at both ends in the first axis direction (the X-axis direction). For example, based on FIG. 14, when the first bare cell 2a among the bare cells 2 may be disposed at the leftmost side, the second bare cell 2b may be disposed at the rightmost side. Meanwhile, the second external terminal 62 may be coupled to the module case 3 through insert molding.

The second external terminal 62 may include a second external terminal main body 621 and a second withdrawal member 622.

The second external terminal main body 621 may be electrically connected to the second bare cell 2b. The second external terminal main body 621 may be disposed inside the module case 3. The second external terminal main body 621 may correspond to one side of the external terminal 6.

The second withdrawal member 622 may be disposed outside the module case 3. The second withdrawal member 622 may be electrically connected to the external device or another energy storage device 1 outside the module case 3. The second withdrawal member 622 may be formed in a plate shape which is upright parallel to the first direction (the FD arrow direction). Accordingly, when a plurality of energy storage devices 1 according to the present invention are provided and disposed to be stacked, it is possible to improve the ease of the operation of electrically connecting the energy storage devices 1 according to the present invention in series. The second withdrawal member 622 may be coupled to the second external terminal main body 621. The second withdrawal member 622 and the second external terminal main body 621 may be formed integrally.

The second withdrawal member 622 and the first withdrawal member 612 may protrude from the module case 3 in the same direction. When the bare cells 2 accommodated inside the module case 3 are connected in series, the energy storage device 1 according to the present invention may be implemented so that 2N bare cells 2 are accommodated in the module case 3. Accordingly, according to the energy storage device 1 according to the present invention, since the second withdrawal member 622 and the first withdrawal member 612 may protrude from the module case 3 in the same direction, it is possible to improve the ease of the operation of electrically connecting the energy storage devices 1 according to the present invention.

When the second withdrawal member 622 and the first withdrawal member 612 protrude from the module case 3 in the same direction, the second withdrawal member 622 may be disposed at one side of both sides of the second external terminal main body 621, which is closer to the first external terminal 61 in the first axis direction (the X-axis direction). The first withdrawal member 612 may be disposed at one side of both sides of the first external terminal main body 611, which is closer to the second external terminal 62 in the first axis direction (the X-axis direction). Based on FIG. 14, when the second external terminal 62 is electrically connected to the second bare cell 2b disposed at the rightmost side among the bare cells 2, the second withdrawal member 622 may be disposed at the left side of the second external terminal main body 621. Based on FIG. 14, when the first external terminal 61 is electrically connected to the first bare cell 2a disposed at the leftmost side among the bare cells 2, the first withdrawal member 612 may be disposed at the right side of the first external terminal main body 611. Accordingly, since the energy storage device 1 according to the present invention can reduce the spacing distance between the second withdrawal member 622 and the first withdrawal member 612 outside the module case 3, it is possible to further improve the ease of the operation of electrically connecting the energy storage devices 1 according to the present invention in series.

The second external terminal 62 may include a second protrusion member 623.

The second protrusion member 623 may protrude from an upper portion of the second external terminal main body 621 toward the sidewall member 33. The second protrusion member 623 may be inserted into the insertion groove (not illustrated) formed in the sidewall member 33.

The second external terminal 62 and the first external terminal 61 may be formed symmetrically. For example, the second external terminal 62 and the first external terminal 61 may be formed line-symmetrically with respect to a line of symmetry parallel to the second axis direction (the Y-axis direction).

Referring to FIGS. 2 to 16, the energy storage device 1 according to the present invention may include a busbar 7.

Each of the busbars 7 electrically connects at least two bare cells 2 among the bare cells 2. When the bare cells 2 are connected in series, each of the busbars 7 may electrically connect two bare cells 2. **In** this case, each of the busbars 7 may be inserted into one partition member 34 and disposed in two accommodation spaces 31 and thus electrically connected to the two bare cells 2. When the bare cells 2 are connected parallel to each other, all of the bare cells 2 accommodated in the module case 3 may be electrically connected. **In** this case, the bare cells 2 may be inserted into all of the partition members 34 of the module case 3 and disposed in all of the accommodation spaces 31, and thus electrically connected to all of the bare cells 2. The busbars 7 may be coupled to the module case 3 to be supported by the sidewall members 33. The busbars 7 may be coupled to the module case 3 through insert molding. The busbars 7 may be formed of a conductive material.

Meanwhile, the busbars 7 are not disposed at one sides of the bare cells 2 to which the external terminal 6 is electrically connected. For example, when the first external terminal 61 is electrically connected to one side of the first bare cell 2a, the busbar 7 may not be disposed at the one side of the first bare cell 2a and may be disposed at only the other side of the first bare cell 2a. For example, when the second external terminal 62 is electrically connected to one side of the second bare cell 2b, the busbar 7 may not be disposed at the one side of the second bare cell 2b and may be disposed at only the other side of the second bare cell 2b. Both sides of the remaining bare cells 2 which are not electrically connected to the external terminals 61 and 62 may be electrically connected to the busbars 7.

Each of the busbars 7 may include a busbar main body 71.

The busbar main body 71 may be disposed between the bare cell 2 accommodated in the accommodation space 31 and the sidewall member 33. The busbar main body 71 may be electrically connected to the bare cell 2 accommodated in the accommodation space 31. The busbar main body 71 may be disposed to be upright in the vertical direction.

Each of the busbars 7 may include an upper protrusion member 72.

The upper protrusion member 72 protrudes from the busbar main body 71. The upper protrusion member 72 may be in contact with an upper surface of the sidewall member 33 and supported by the sidewall member 33. The upper protrusion member 72 may be inserted into the insertion groove formed in the sidewall member 33. The upper protrusion member 72 may protrude from an upper portion of the busbar main body 71 toward the sidewall member 33. The upper protrusion member 72 and the busbar main body 71 may be formed integrally.

Referring to FIGS. 2 to 16, the energy storage device 1 according to the present invention may include a plurality of internal terminals 8.

The internal terminals 8 are connected to each of the bare cells 2. The internal terminals 8 may be connected to the busbars 7 or the external terminals 6. **In** the case of a bare cell 2 of which both sides are electrically connected to different busbars 7 among the bare cells 2, the internal terminal 8 connected to the one side of the corresponding bare cell 2 and the internal terminal 8 connected to the other side of the corresponding bare cell 2 may be connected to different busbars 7. **In** the case of a bare cell 2 of which one side is electrically connected to the external terminal 6 and the other side is electrically connected to the busbar 7 among the bare cells 2, the internal terminal 8 connected to the one side of the corresponding bare cell 2 may be connected to the external terminal 6, and the internal terminal 8 connected to the other side of the corresponding bare cell 2 may be connected to the busbar 7. The internal terminals 8 may be formed of a conductive material.

Each of the internal terminals 8 may include an internal terminal main body 81.

The internal terminal main body 81 may be disposed between the bare cell 2 and the busbar 7. In this case, the internal terminal main body 81 may be connected to each of the bare cell 2 and the busbar 7 to electrically connect the bare cell 2 to the busbar 7. The internal terminal main body 81 may be disposed between the bare cell 2 and the external terminal 6. The internal terminal main body 81 may be connected to each of the bare cell 2 and the external terminal 6 to electrically connect the bare cell 2 to the external terminal 6. An inner surface of the internal terminal main body 81 may be connected to a first electrode lead 212 or a second electrode lead 222 of the bare cell 2. An outer surface of the internal terminal main body 81 may be connected to the busbar main body 71 of the busbar 7 or the external terminal main body of the external terminal 6.

Each of the internal terminals 8 may include a terminal protrusion member 82.

The terminal protrusion member 82 protrudes from the internal terminal main body 81. The terminal protrusion member 82 may protrude from an upper portion of the internal terminal main body 81 toward the sidewall member 33. The terminal protrusion member 82 and the internal terminal main body 81 may be formed integrally.

When the internal terminal 8 is connected to the busbar 7, the terminal protrusion member 82 may be in contact with the upper protrusion member 72 of the busbar 7 and supported by the busbar 7. Accordingly, the internal terminal 8 can be firmly supported by the busbar 7 to stably maintain a state of being connected to each of the bare cell 2 and the busbar 7.

When the internal terminal 8 is connected to the first external terminal 61, the terminal protrusion member 82 may be in contact with the first protrusion member 613 of the first external terminal 61 and supported by the first protrusion member 613. Accordingly, the internal terminal 8 can be firmly supported by the first external terminal 61 to stably maintain a state of being connected to each of the first bare cell 2a and the first external terminal 61.

When the internal terminal 8 is connected to the second external terminal 62, the terminal protrusion member 82 may be in contact with the second protrusion member 623 of the second external terminal 62 and supported by the second protrusion member 623. Accordingly, the internal terminal 8 can be firmly supported by the second external terminal 62 to stably maintain a state of being connected to each of the second bare cell 2b and the second external terminal 62.

Each of the internal terminals 8 may include a plurality of impregnation holes 83.

The impregnation holes 83 may be formed to pass through the internal terminal main body 81. The impregnation holes 83 may be used as passages for impregnating the bare cells 2 with an electrolyte. Accordingly, the energy storage device 1 according to the present invention is implemented to perform an impregnation operation of impregnating the bare cells 2 with an electrolyte through the impregnation holes 83 in a state in which the internal terminals 8 are coupled to the bare cells 2. Accordingly, the energy storage device 1 according to the present invention can improve the ease of the impregnation operation.

Each of the impregnation holes 83 may be formed to pass through the internal terminal main body 81. **In** this case, the impregnation holes 83 may be disposed to be spaced apart from each other in a circumferential direction based on the center of the internal terminal main body 81. One of the impregnation holes 83 may be formed to pass through the center of the internal terminal main body 81.

The present invention is not limited by the above-described embodiments and the accompanying drawings, and it will be apparent to those skilled in the art to which the present invention pertains that various substitutions, modifications, and changes are possible without departing from the scope of the technical spirit of the present invention.

## Claims

1. An energy storage device comprising:
a module case in which a plurality of accommodation spaces are formed;
a plurality of bare cells, each of which is accommodated in one of the accommodation spaces;
a cover coupled to the module case; and
a coupling part coupling the module case to the cover,
wherein the module case is in direct contact with the bare cells accommodated in the accommodation spaces to support the bare cells,
the cover includes:
a cover main body coupled to the module case to cover the accommodation spaces;
an outer wall member protruding from a cover facing surface of the cover main body, which faces the module case, in a first direction toward the module case; and
an inner wall member protruding from the cover facing surface in the first direction and disposed to be spaced apart from the outer wall member, and
the coupling part includes a first coupling member disposed between the outer wall member and the inner wall member to couple the module case to the cover.

2. The energy storage device of claim 1, wherein the outer wall member and the inner wall member support a first coupling resin to restrict a flowable distance of the first coupling resin formed by melting the first coupling member.

3. The energy storage device of claim 1 or 2, wherein the module case includes a module main body in which the accommodation spaces are formed, and
the coupling part is coupled to the module case to protrude from a module facing surface of the module main body, which faces the cover facing surface, in a second direction toward the cover main body.

4. The energy storage device of claim 1, wherein the outer wall member is disposed to surround a portion of the cover facing surface, which covers the accommodation spaces, and
the inner wall member is disposed to be spaced inward from the outer wall member.

5. The energy storage device of claim 1, wherein the accommodation spaces are disposed to be spaced apart from each other in a first axis direction in the module case,
the cover includes a plurality of first spacing members protruding in the first direction at a position corresponding to a first accommodation space among the accommodation spaces, and a plurality of first connection members connecting both ends of the first spacing members in the first axis direction,
the coupling part includes a second coupling member disposed between a first adjacent connection member, which is spaced a shortest distance from the outer wall member in the first axis direction among the first connection members, and the outer wall member to couple the module case to the cover, and
the first adjacent connection member, which is spaced the shortest distance from the outer wall member in the first axis direction among the first connection members, and the outer wall member support a second coupling resin to restrict a flowable distance of the second coupling resin formed by melting the second coupling member.

6. The energy storage device of claim 5, wherein the inner wall member includes a plurality of first inner wall members disposed to be spaced apart from each other in a second axis direction perpendicular to the first axis direction,
the first spacing members are disposed between the first inner wall members in the second axis direction,
each of the first inner wall members includes a first supporting inner wall spaced apart from the outer wall member in the second axis direction to support the first coupling member, and a plurality of first supporting sidewalls, each of which has one side connected to both ends of the first supporting inner wall and the other side extending toward the first connection members, and
one side of the second coupling resin is supported by the outer wall member and the other side thereof is supported by the first connection member, which is spaced the shortest distance from the outer wall member in the first axis direction, and the first supporting sidewall.

7. The energy storage device of claim 6, wherein the cover includes a plurality of second spacing members protruding in the first direction at a position corresponding to a second accommodation space among the accommodation spaces, and a plurality of second connection members connecting both ends of the second spacing members in the first axis direction,
the coupling part includes a third coupling member disposed between the first connection member and the second connection member that are disposed to face each other in the first axis direction to couple the module case to the cover, and
the first connection member and the second connection member that are disposed to face each other in the first axis direction support a third coupling resin to restrict a flowable distance of the third coupling resin formed by melting the third coupling member.

8. The energy storage device of claim 7, wherein the inner wall member includes a plurality of second inner wall members disposed to be spaced apart from each other in the second axis direction,
each of the second inner wall members includes a second supporting inner wall spaced apart from the outer wall member in the second axis direction to support the first coupling member, and a plurality of second supporting sidewalls, each of which has one side connected to both ends of the second supporting inner wall and the other side extending toward the second connection members, and
the first supporting sidewall and the second supporting sidewall that are disposed to face each other in the first axis direction support the third coupling resin to restrict the flowable distance of the third coupling resin.

9. The energy storage device of claim 1, wherein the accommodation spaces are disposed to be spaced apart from each other in a first axis direction in the module case,
the cover includes a plurality of spacing members protruding from the cover facing surface in the first direction, a plurality of spacing grooves formed in the spacing members, and a plurality of spacing protrusions protruding in the first direction from both sides of each of the spacing grooves in the first axis direction,
each of the spacing protrusions includes a protrusion surface disposed to be oriented in the first direction, and
each of the protrusion surfaces is formed to have a curved surface of which a center of curvature is disposed in a second direction opposite to the first direction.

10. The energy storage device of claim 9, wherein the cover includes a plurality of connection members protruding from the cover facing surface in the first direction, and
each of the connection members protrudes from the cover facing surface in the first direction with a shorter length than each of the spacing protrusions.

11. The energy storage device of claim 9, wherein the cover includes a plurality of connection members protruding from the cover facing surface in the first direction, and
each of the connection members includes a connection surface disposed to be oriented in the first direction, and
each of the connection surfaces is formed to have a curved surface of which a center of curvature is disposed in the second direction.

12. The energy storage device of claim 1, wherein the accommodation spaces are disposed to be spaced apart from each other in a first axis direction in the module case,
the cover includes a plurality of spacing members protruding from the cover facing surface in the first direction, a plurality of connection members connecting the spacing members disposed to be spaced apart from each other in a second axis direction perpendicular to the first axis direction, and a plurality of reinforcing members connecting the spacing members disposed to be spaced apart from each other in the second axis direction, and
the reinforcing members are disposed between the connection members connecting both ends of the spacing members in the first axis direction.

13. The energy storage device of claim 1, wherein the cover includes a plurality of protrusion members protruding from an outer cover surface of the cover main body, which is disposed at a side opposite to the cover facing surface, in a second direction opposite to the first direction, and
the protrusion members are disposed at positions one-to-one corresponding to the accommodation spaces.
